# EUROPÄISCHE PATENTANMELDUNG

(11) **EP 2 927 511 A1**
(43) Veröffentlichungstag der Anmeldung: **07.10.2015**
(21) Anmeldenummer: 14163055.8
(22) Anmeldetag: 01.04.2014
(51) Int. Cl.: F16B 13/14

(54) **Schraube mit Masseauspresskolben**

(71) Anmelder: HILTI Aktiengesellschaft, 9494 Schaan (LI)
(72) Erfinder: Nguyen, Huu Toan, 88142 Wasserburg (DE); Spampatti, Matteo, 9470 Buchs (CH)
(74) Vertreter: Hilti Aktiengesellschaft Corporate Intellectual Property

(57) **Zusammenfassung**

Die Erfindung betrifft eine Schraube, insbesondere eine Betonschraube, mit einem Schaft (110,410), der ein vorderes Ende zum Einführen in eine Bohrung in einem Substrat und ein rückwärtiges Ende aufweist, und zumindest einer Gewindewendel (111,411), die am Schaft angeordnet ist. Erfindungsgemäss ist vorgesehen, dass die Schraube einen Auspresskolben (130,230,330,430) aufweist, welcher dem vorderen Ende des Schafts vorgelagert ist, wobei zwischen dem Auspresskolben und dem Schaft ein Massereservoir (160,460) vorgesehen ist.

## Beschreibung

Die Erfindung betrifft eine Schraube, insbesondere eine selbstschneidende Schraube, gemäss dem Oberbegriff des Anspruchs 1. Eine solche Schraube ist ausgestattet mit einem Schaft, der ein vorderes Ende zum Einführen in eine Bohrung in einem Substrat und ein rückwärtiges Ende aufweist, und zumindest einer Gewindewendel, die am Schaft angeordnet ist.

Aus der DE 198 20 671 A1 ist ein Verfahren zur Verankerung einer selbstschneidenden Schraube in einer Bohrung in Beton bekannt, bei dem zuerst die Bohrung ausgeführt wird und dann in die Bohrung eine Mörtelmasse eingebracht wird. Anschliessend wird die selbstschneidende Schraube in die Bohrung eingeschraubt, wobei die Spitze der selbstschneidenden Schraube in die Mörtelmasse eintaucht und einen Teil der Mörtelmasse entlang des Schafts zurück, also in Richtung der Öffnung der Bohrung, verdrängt. Im Endergebnis soll die gesamte Bohrung mit der Mörtelmasse ausgefüllt sein, so dass die selbstschneidende Schraube von ausgehärteter Mörtelmasse umgeben ist.

Die DE 102011003127 A1 beschreibt ein weiteres Verfahren zur Verankerung einer selbstschneidenden Schraube. Die DE 102011003127 A1 schlägt vor, in das Bohrloch eine Klebstoffkartusche einzusetzen, die beim Setzen der Schraube von der Schraube zerdrückt wird. Dadurch wird der Klebstoff freigesetzt. Durch den Einsatz eines Bundbohrers soll eine definierte Bohrlochtiefe gewährleistet werden. Damit kann gemäss DE 102011003127 A1 eine potenziell aufwändige Klebstoffdosierung beim Setzvorgang entbehrlich werden.

Aufgabe der Erfindung ist es, eine Schraube anzugeben, die bei besonders guten Lastwerten und besonders hoher Zuverlässigkeit besonders einfach und zuverlässig setzbar ist.

Die Aufgabe wird erfindungsgemäss durch eine Schraube mit den Merkmalen des Anspruchs 1 gelöst. Bevorzugte Ausführungsformen sind in den abhängigen Ansprüchen angegeben.

Eine erfindungsgemässe Schraube ist dadurch gekennzeichnet, dass sie einen Auspresskolben aufweist, welcher dem vorderen Ende des Schafts vorgelagert ist, wobei zwischen dem Auspresskolben und dem Schaft ein Massereservoir vorgesehen ist.

Ein Grundgedanke der Erfindung kann darin gesehen werden, an der Schraube ein Massereservoir, insbesondere Klebstoffreservoir, sowie einen Auspresskolben vorzusehen, welcher das Massereservoir beim Einschrauben der Schraube in ein Bohrloch ausdrückt, so dass die im Massereservoir enthaltene Masse zwischen Schaft und Bohrlochwand gelangt. Insbesondere ist die Schraube so konfiguriert, dass sich der Auspresskolben während des Einschraubens der Schraube an den Schaft annähert. Hierdurch wird das Volumen zwischen Auspresskolben und Schaft verkleinert, so dass das zwischen Auspresskolben und Schaft befindliche Massereservoir ausgedrückt wird. Mit der Erfindung kann also eine verklebte Verschraubung realisiert werden, so dass besonders hohe Lastwerte erhalten werden können. Dabei wird nach der Erfindung dem Monteur eine definierte Massemenge vorgegeben, so dass eine besonders hohe Zuverlässigkeit gegeben ist. Zugleich ist der Setzvorgang der erfindungsgemässen Schraube für den Monteur besonders einfach. Denn da das Ausbringen der Masse nach der Erfindung automatisch direkt beim Setzen erfolgen kann, ist kein zusätzlicher Arbeitsschritt zum Einbringen der Masse in das Bohrloch mittels einer separaten Pumpe erforderlich.

Besonders vorteilhaft ist es, dass die Schraube eine selbstschneidende Schraube ist, also eine Schraube, deren zumindest eine Gewindewendel ihr Gegengewinde im Substrat, in dem die Bohrung besteht, selbst schneiden kann. Insbesondere kann die Schraube eine Betonschraube sein, also eine Schraube, bei der sich die zumindest eine Gewindewendel ihr Gegengewinde in einem Betonsubstrat selbst schneiden kann. Grundsätzlich könnte die Erfindung aber auch bei Schrauben zum Einsatz kommen, die in ein bestehendes Innengewinde eingeschraubt werden.

Das Massereservoir enthält zweckmässigerweise eine fliessfähige Masse, die bei Druck des Auspresskolbens aus dem Massereservoir in den Ringspalt zwischen Schaft und Bohrlochwand fliessen kann. Insbesondere kann es sich um eine aushärtbare Masse handeln, die vorzugsweise nach dem Einfliessen zwischen Schaft und Bohrlochwand aushärtet. Die Masse kann somit insbesondere eine fliessfähige, aushärtbare Füllmasse sein. Bei der Masse kann es sich beispielsweise um einen Mehrkomponenten-Kunstharzmörtel auf der Basis von Polyester- oder Epoxidharz handeln, der durch Vermischung der Komponenten aktiviert wird. In diesem Fall können die Komponenten im Massereservoir getrennt vorliegen und beim Auspressen gemischt werden. Bevorzugt handelt es sich bei der Masse um aushärtbaren Klebstoff. Der Klebstoff kann vorzugsweise durch Druck, beispielsweise durch Druck des Auspresskolbens, aktivierbar sein kann. Somit kann der Klebstoff durch die Wirkung des Auspresskolbens aktiviert werden und anschliessend zwischen Schaft und Bohrlochwand aushärten. Der Klebstoff kann aber auch erst durch den Druck zwischen Schaft und Bohrlochwand aktiviert werden. Bei dem Klebstoff kann es sich auch um einen mikroverkapselten Klebstoff handeln, der durch Aufbrechen der Mikroverkapselung aktiviert wird. Vorzugsweise ist das Massereservoir am Auspresskolben angeordnet.

Auf dem Schaft können eine oder mehrere Gewindewendeln vorgesehen sein, die vom Schaft radial vorstehen. Die Gewindewendel geht insbesondere vom vorderen Ende des Schafts aus. Die Gewindewendel und der Schaft werden hier vorzugsweise als separate Teile angesehen. Am rückwärtigen Ende des Schafts ist vorzugsweise eine Lastangriffseinrichtung zum Einleiten von Zugkräften in den Schaft angeordnet, beispielsweise ein Schraubenkopf, der über den Querschnitt des Schafts hervorsteht. Soweit hier von axial, radial und der Umfangsrichtung die Rede ist, kann sich dies insbesondere auf die Längsachse des Schafts beziehen. Der Schaft kann zumindest annähernd zylindrisch ausgeführt sein und/oder aus Metall bestehen. Der Auspresskolben kann beispielsweise aus Kunststoff bestehen, was im Hinblick auf den Herstellungsaufwand vorteilhaft sein kann.

Grundsätzlich kann vorgesehen werden, dass der Auspresskolben im Laufe des Einschraubvorgangs am Bohrlochgrund anschlägt und somit vom Bohrlochgrund axial fixiert wird. Beim weiteren Einschrauben der Schraube wird dann das Volumen zwischen dem axial festliegenden Auspresskolben und dem axial weiter vorrückenden Schaft verkleinert, so dass Masse aus dem Massereservoir ausgepresst wird. Dies ermöglicht eine konstruktiv besonders einfache Ausführung der Schraube, bei welcher der Auspresskolben beispielsweise über eine glatte Kolbenstange mit dem Schaft verbunden sein kann. Allerdings muss häufig mit einer definierten Bohrlochtiefe gearbeitet werden.

Besonders bevorzugt ist es, dass der Auspresskolben über eine Gewindestange mit dem Schaft verbunden ist. Insbesondere kann an der Gewindestange ein Spindeltrieb gebildet sein, der eine Rotation des Schafts relativ zum Auspresskolben in eine Translationsbewegung des Auspresskolbens relativ zum Schaft umwandelt. Hierdurch kann der Setzvorgang weiter automatisiert und somit vereinfacht werden, da einfach durchzuführende Bewegungen an der Schraube in eine Betätigungsbewegung des Auspresskolbens umgesetzt werden können. Da gemäss dieser Ausführungsform der Auspresskolben durch den Spindeltrieb und in der Regel nicht oder nur teilweise vom Bohrlochgrund betätigt wird, kann überdies mit veränderlicher Bohrlochtiefe gearbeitet werden, was den Setzvorgang weiter vereinfacht. Insbesondere kann gewährleistet werden, dass automatisch die richtige Menge an Masse freigesetzt wird, um den Schaft und/oder die Gewindewendel optimal zu benetzen. Der Spindeltrieb wird vorzugsweise durch das Gewinde der Gewindestange und ein korrespondierendes Innengewinde gebildet, wobei das Gewinde der Gewindestange in das korrespondierende Innengewinde eingreift, und wobei das korrespondierende Innengewinde je nach Ausführung am Auspresskolben oder am Schaft angeordnet sein kann.

Die Gewinde des Spindeltriebs können von Anfang an vorhanden sein. Eines der Gewinde kann auch erst während des Setzens geschnitten werden. Hierzu kann beispielsweise die Gewindestange aus einem weicheren Material gefertigt werden als das Innengewinde, in welches sie eingeschraubt wird, so dass das Aussengewinde der Gewindestange erst beim Einschrauben entsteht.

Insbesondere kann vorgesehen sein, dass der Spindeltrieb eine Rotation des Schafts relativ zum Auspresskolben in Einschraubrichtung der zumindest einen Gewindewendel in eine translatorische Annährungsbewegung des Auspresskolbens an den Schaft umwandelt. Gemäss dieser Ausführungsform kann die Drehbewegung beim Einschrauben der Schraube den Auspresskolben zum Schaft hin bewegen, das heisst an den Schaft annähern, so dass die Masse aus dem Massereservoir ausgepresst wird. Unter der Einschraubrichtung der Gewindewendel kann insbesondere die Drehrichtung verstanden werden, bei der sich der Schaft mit der Gewindewendel mit dem vorderen Ende des Schafts voran in ein Substrat einschraubt.

Beispielsweise kann die Gewindestange drehfest am Auspresskolben angeordnet sein, und der Schaft ein Innengewinde aufweisen, in welches die Gewindestange eingeschraubt ist. Demgemäss ist der Spindeltrieb zwischen der Gewindestange und dem Schaft gebildet. Da bei dieser Ausführungsform die Gewindestange beim Auspressen in den Schaft eingedreht werden kann, können in besonders einfacher Weise Bauformen realisiert werden, die mit besonders kurzen Bohrlöchern auskommen. Insbesondere kann die Gewindestange einstückig mit dem Auspresskolben ausgebildet sein, was den Herstellungsaufwand weiter reduzieren kann. Der Auspresskolben und/oder die Gewindestange können beispielsweise aus Kunststoff bestehen.

In einer alternativen Ausführung ist die Gewindestange drehfest am Schaft angeordnet, und der Auspresskolben weist ein Innengewinde auf, in welches die Gewindestange eingeschraubt ist. Demgemäss ist der Spindeltrieb zwischen der Gewindestange und dem Auspresskolben gebildet. Dies kann herstellungstechnisch besonders vorteilhaft sein, da das Innengewinde nicht am funktionsbedingt häufig relativ harten Schaft angebracht werden muss. Insbesondere kann vorgesehen werden, dass die Gewindestange und der Schaft separate Teile sind. Hierdurch kann der Herstellungsaufwand noch weiter reduziert und die Funktionalität noch weiter verbessert werden. Beispielsweise können der Schaft aus Metall und/oder die Gewindestange aus Kunststoff bestehen. Insbesondere kann die Gewindestange axial stauchbar ausgebildet sein, so dass mit besonders kurzen Bohrlöchern gearbeitet werden kann.

Soweit die Gewindestange drehfest am Schaft angeordnet ist, ist es weiter besonders bevorzugt, dass die Gewindestange und der Schaft über eine drehfeste Einsteckverbindung gekoppelt sind. Die drehfeste Einsteckverbindung kann die Gewindestange und den Schaft formschlüssig drehfest koppeln. Beispielsweise kann im Schaft stirnseitig eine Ausnehmung vorgesehen sein, in welche ein vorspringendes Gegenprofil an der Gewindestange eingreift. Die Aussparung und/oder das vorspringende Gegenprofil können zum Beispiel kreuzförmig ausgebildet sein. Zusätzlich zur drehfesten Einsteckverbindung, dann als zusätzliche Sicherung insbesondere in Axialrichtung, oder alternativ zur Einsteckverbindung können die Gewindestange und der Schaft auch stoffschlüssig verbunden, zum Beispiel verklebt sein.

Besonders bevorzugt ist es, dass der Auspresskolben zumindest bereichsweise radial über den Schaft vorsteht. Gemäss dieser Ausführungsform steht der Auspresskolben an zumindest einer Stelle radial über den Schaft vor, wenn der Schaft mit Blickrichtung entlang seiner Längsachse von vorne betrachtet wird. Hierdurch kann in besonders einfacher Weise eine besonders wirksame reibschlüssige Verbindung zwischen dem Auspresskolben und der Bohrlochwand hergestellt werden. Diese Verbindung wiederum kann eine relative Drehbewegung zwischen Auspresskolben und Schaft beim Eindrehen der Schraube bewirken, die über den Spindeltrieb in eine automatische Auspressbewegung beim Eindrehen umgesetzt werden kann. Insbesondere kann der Auspresskolben zumindest einen radial vorspringenden Gewindeabschnitt aufweisen. Hierdurch kann die relative Drehbewegung zwischen Auspresskolben und Schaft besonders genau eingestellt werden.

Weiterhin ist es bevorzugt, dass der Auspresskolben einen Dichtkragen aufweist, wobei vorzugsweise der Schaft an seinem vorderen Ende bereichsweise im Dichtkragen aufgenommen ist. Gemäss dieser Ausführungsform kann der Auspresskolben eine Halbschale bilden, in welcher der Schaft bereichsweise aufgenommen ist. Hierdurch kann ein besonders gut definierter Massestrom erhalten werden.

Die Erfindung betrifft auch ein Verfahren zum Setzen einer erfindungsgemässen Schraube. Bei dem Verfahren wird die Schraube in eine Bohrung in einem Substrat eingedreht, wobei vorzugsweise die zumindest eine Gewindewendel ein Gegengewinde in das Substrat schneidet, und wobei der Auspresskolben Masse aus dem Massereservoir auspresst.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine teilweise geschnittene Seitenansicht eines ersten Ausführungsbeispiels einer erfindungsgemässen Schraube;
- Figur 2:: eine Draufsicht auf den Auspresskolben des Ausführungsbeispiels aus Figur 1 von hinten;
- Figur 3:: eine perspektivische Ansicht eines modifizierten Auspresskolbens für eine Schraube gemäss Figur 1;
- Figur 4:: eine geschnittene Ansicht des Auspresskolbens aus Figur 3;
- Figur 5:: eine Seitenansicht eines weiteren modifizierten Auspresskolbens für eine Schraube gemäss Figur 1;
- Figur 6:: eine Seitenansicht eines zweiten Ausführungsbeispiels einer erfindungsgemässen Schraube, wobei der Auspresskolben der Übersichtlichkeit halber getrennt von der Schraube gezeigt ist;
- Figur 7:: eine Ansicht des Schafts aus Figur 6 von vorne; und
- Figur 8:: eine Seitenansicht der Gewindestange aus Figur 6, getrennt vom Schaft der Schraube.

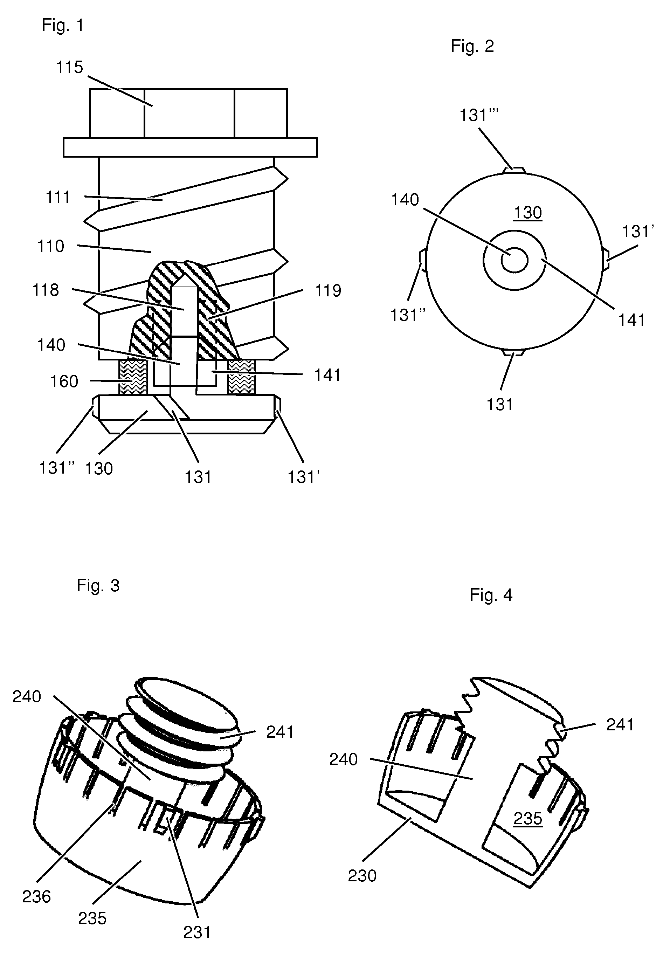

Ein erstes Ausführungsbeispiel einer erfindungsgemässen Schraube ist in den Figuren 1 und 2 dargestellt. Die Schraube weist einen etwa zylindrischen Schaft 110 auf, an dessen rückwärtigem Ende eine beispielhaft als Schraubenkopf 115 dargestellte Lastangriffseinrichtung zum Einleiten von Zugkräften in den Schaft 110 angeordnet ist. An der Umfangsfläche des Schafts 110 ist eine helixförmige, selbstschneidende Gewindewendel 111 angeordnet, die im Bereich des vorderen Endes des Schafts 110 beginnt. In der vorderen Stirnfläche des Schafts 110 befindet sich eine Bohrung 118 mit einem Innengewinde 119. Die Funktion dieser Elemente 118, 119 wird weiter unten im Detail erläutert.

Dem vorderen Ende des Schafts 110 ist ein hier beispielhaft scheibenförmig dargestellter Auspresskolben 130 vorgelagert. Am Auspresskolben 130 ist eine Gewindestange 140 mit einem Aussengewinde 141 drehfest angeordnet. Diese Gewindestange 140 mit dem Aussengewinde 141 ist in das Innengewinde 119 des Schafts 110 eingeschraubt. An der Umfangsfläche des Auspresskolbens 130 sind vier radial vorstehende Gewindeabschnitte 131, 131', 131", 131'" angeordnet. Axial zwischen dem Schaft 110 und dem Auspresskolben 130 befindet sich ein beispielhaft ringförmig dargestelltes Massereservoir 160, welches eine aushärtbare Masse, insbesondere eine Füllmasse oder/und eine Klebstoffmasse, enthält.

Beim Eindrehen der Schraube in ein Bohrloch in einem Substrat kommen die Gewindeabschnitte 131, 131', 131", 131'" in Kontakt mit der Bohrlochwand und bewirken eine Relativdrehung des Auspresskolbens 130 relativ zum Schaft 110. Das am Schaft angeordnete Innengewinde 119 und das drehfest mit dem Auspresskolben 130 verbundene Aussengewinde 141 bilden einen Spindeltrieb, welcher diese Relativdrehung in eine translatorische Annäherung des Auspresskolbens 130 an den Schaft 110 umsetzt. Bei dieser linearen Annäherung wird das Massereservoir 160 axial komprimiert. Hierdurch wiederum wird Masse aus dem Massereservoir 160 ausgepresst, die beim weiteren Einschrauben an die Umfangsfläche des Schafts 110 gelangt und am Ende des Einschraubvorgangs dort aushärtet.

Durch das Zusammenspiel der Steigungswinkel der Gewinde 111, 141 und 119 wird die Auspressrate der beim Setzvorgang abgegebenen Masse definiert. Insbesondere kann vorgesehen sein, dass das Aussengewinde 141 der Gewindestange 140 gleichsinnig zur Gewindewendel 111 am Schaft 110 ist.

Der Steigungswinkel der Gewindeabschnitte 131, 131', 131", 131 '" kann zwischen -90° und +90° liegen und ist eine zusätzliche Komponente, die eine rotatorische Relativbewegung zwischen Bohrloch und Auspresskolben 130 beeinflussen kann. Durch einen positiven oder negativen Winkel kann somit die Massemenge weiter gesteuert werden. Sind die Gewindeabschnitte 131, 131', 131", 131'" gleichsinnig mit der Gewindewendel 111, so kann der Auspresskolben 130 weniger Masse abgeben und umgekehrt.

Eine weitere Ausführungsform eines Auspresskolbens 230 für die Schraube gemäss Figuren 1 und 2 ist in den Figuren 3 und 4 gezeigt. Wie beim Ausführungsbeispiel der Figuren 1 und 2 ist auch der Auspresskolben 230 der Figuren 3 und 4 scheibenförmig ausgebildet und weist drehfest eine Gewindestange 240 mit einem Aussengewinde 241 zum Einschrauben in das Innengewinde 119 des Schafts 110 auf. Beim Ausführungsbeispiel der Figuren 3 und 4 ist am Auspresskolben 230 jedoch ein zusätzlicher ringförmiger, zylindermantelartiger Dichtkragen 235 vorgesehen. Der Dichtkragen 235 geht vom Auspresskolben 230 aus, umgibt die Gewindestange 240 ringförmig, erstreckt sich zum Schaft 110 hin, und kann das vordere Ende des Schafts 110 zumindest teilweise aufnehmen. Mittels des Dichtkragens 235 kann der Massestrom gezielt beeinflusst werden. Der Dichtkragen 235 weist eine Vielzahl von Einschnitten 236 auf, die von demjenigen Ende des Dichtkragens 235 ausgehen, welcher dem Schaft 110 zugewandt und dem Auspresskolben 230 abgewandt ist. Diese Einschnitte 236 können als Durchgangsöffnungen für die Masse dienen und/oder das Einführen des Schafts 110 in den Dichtkragens 235 erleichtern. Auch bei der Ausführungsform der Figuren 3 und 4 sind Gewindeabschnitte 231 vorgesehen, die hier jedoch am Dichtkragen angeordnet sind, vorzugsweise auf Höhe der Einschnitte 236.

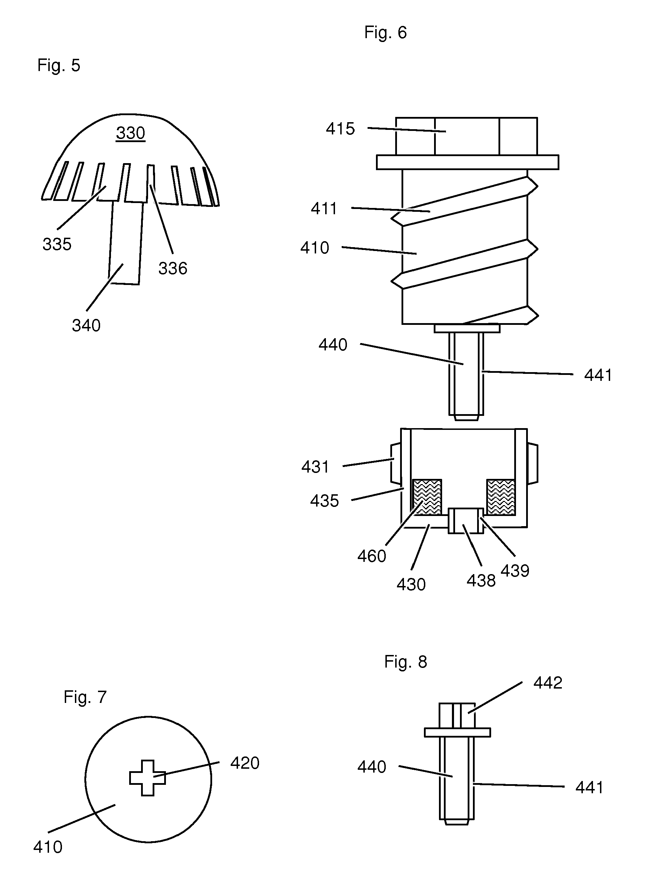

Eine weitere Ausführungsform eines Auspresskolbens 330 für die Schraube gemäss Figuren 1 und 2 ist in Figur 5 gezeigt. Beim Ausführungsbeispiel der Figur 5 ist der Auspresskolben 330 nicht als ebene Scheibe, sondern gekrümmt ausgebildet, was den Masseeinschluss noch weiter verbessern kann. Auch beim Ausführungsbeispiel der Figur 5 ist ein Dichtkragen 335 mit endseiteigen Einschnitten 336 vorgesehen, wobei sich der gekrümmte Dichtkragen 335 der Figur 5 stetig an den gekrümmten Auspresskolben 330 anschliesst.

Die drehfest am Auspresskolben 330 angeordnete Stange 340 ist hier beispielhaft ohne Aussengewinde gezeigt. Der Auspresskolben 330 kann in diesem Fall beim Anschlagen am Grund des Bohrlochs, in welches die Schraube eingedreht wird, an den Schaft 110 herangeführt werden.

Ein weiteres Ausführungsbeispiel einer erfindungsgemässen Schraube ist in den Figuren 6 bis 8 dargestellt. Die Schraube der Figuren 6 bis 8 weist, analog zur Schraube der Figuren 1 und 2, einen etwa zylindrischen Schaft 410 auf, an dessen rückwärtigen Ende eine beispielhaft als Schraubenkopf 415 dargestellte Lastangriffseinrichtung zum Einleiten von Zugkräften in den Schaft 410 angeordnet ist. An der Umfangsfläche des Schafts 410 ist eine helixförmige, selbstschneidende Gewindewendel 411 angeordnet, die im Bereich des vorderen Endes des Schafts 410 beginnt.

Dem vorderen Ende des Schafts 410 ist ein hier beispielhaft scheibenförmig dargestellter Auspresskolben 430 vorgelagert, der vorzugsweise einen Dichtkragen 435 und hieran radial vorspringende Gewindeabschnitte 431 aufweist. Zwischen dem Auspresskolben 430 und dem Schaft 410 ist ein Massereservoir 460 angeordnet.

Ähnlich wie beim Ausführungsbeispiel der Figuren 1 und 2 ist auch beim Ausführungsbeispiel der Figuren 6 bis 8 eine Gewindestange 440 zum Betätigen des Auspresskolbens 430 vorgesehen. Das Ausführungsbeispiel der Figuren 6 bis 8 unterscheidet sich jedoch vom Ausführungsbeispiel der Figuren 1 und 2 durch die Anordnung der Gewindestange 440. So ist gemäss Ausführungsbeispiel der Figuren 6 bis 8 die Gewindestange 440 drehfest am Schaft 410 der Schraube angeordnet, und das Innengewinde 439, welches das Aussengewinde 441 der Gewindestange 440 zum Bilden eines Spindeltriebs aufnimmt, ist am Auspresskolben 430 angeordnet. Hierzu weist der Auspresskolben 430 eine zentrale Bohrung 438 auf, in dessen Wand das Innengewinde 439 vorgesehen ist. Mit Ausnahme der Anordnung der Gewindestange 440 und des Innengewindes kann der Auspresskolben 430 des Ausführungsbeispiels der Figuren 6 bis 8 auch wie in den Figuren 1 und 2, den Figuren 3 und 4 und/oder der Figur 5 dargestellt ausgeführt werden.

Wie die Figuren 7 und 8 zeigen, weist der Schaft 410 zur drehfesten Kopplung mit der Gewindestange 440 eine stirnseitige Ausnehmung 420 auf, in welche ein vorspringendes Gegenprofil 442 am rückwärtigen Ende der Gewindestange 440 formschlüssig eingreift. Im dargestellten Ausführungsbeispiel sind die Ausnehmung 420 und das Gegenprofil 442 kreuzförmig ausgebildet. Zusätzlich können der Schaft 410 und die Gewindestange 440 auch verklebt sein. Die Ausnehmung 420 kann beispielsweise eine Einprägung sein. Die Gewindestange 440 kann insbesondere aus Kunststoff bestehen. Vorzugsweise ist sie axial stauchbar, damit die Schraube auch in kurzen Bohrlöchern verwenden werden kann.

## Patentansprüche

1. Schraube mit ist
einem Schaft (110, 410), der ein vorderes Ende zum Einführen in eine Bohrung in einem Substrat und ein rückwärtiges Ende aufweist, und
zumindest einer Gewindewendel (111, 411), die am Schaft (110, 410) angeordnet ist, **dadurch gekennzeichnet,**
**dass** die Schraube einen Auspresskolben (130, 230, 330, 430) aufweist, welcher dem vorderen Ende des Schafts (110, 410) vorgelagert ist, wobei zwischen dem Auspresskolben (130, 230, 330, 430) und dem Schaft (110, 410) ein Massereservoir (160, 460) vorgesehen ist.

2. Schraube nach Anspruch 1,
**dadurch gekennzeichnet,**
**dass** der Auspresskolben (130, 230, 330, 430) über eine Gewindestange (140, 240, 340, 440) mit dem Schaft (110, 410) verbunden ist, wobei an der Gewindestange (140, 240, 340, 440) ein Spindeltrieb gebildet ist, der eine Rotation des Schafts (110, 410) relativ zum Auspresskolben (130, 230, 330, 430) in eine Translationsbewegung des Auspresskolbens (130, 230, 330, 430) relativ zum Schaft (110, 410) umwandelt.

3. Schraube nach einem der vorstehenden Ansprüche,
**dadurch gekennzeichnet,**
**dass** der Spindeltrieb eine Rotation des Schafts (110, 410) relativ zum Auspresskolben (130, 230, 330, 430) in Einschraubrichtung der zumindest einen Gewindewendel (111, 411) in eine translatorische Annährungsbewegung des Auspresskolbens (130, 230, 330, 430) an den Schaft (110, 410) umwandelt.

4. Schraube nach einem der Ansprüche 1 bis 3,
**dadurch gekennzeichnet,**
**dass** die Gewindestange (140, 240, 340) drehfest am Auspresskolben (130, 230, 330) angeordnet ist, und dass der Schaft (110) ein Innengewinde (119) aufweist, in welches die Gewindestange (140, 240, 340) eingeschraubt ist.

5. Schraube nach einem der Ansprüche 1 bis 3,
**dadurch gekennzeichnet,**
**dass** die Gewindestange (440) drehfest am Schaft (410) angeordnet ist, und dass der Auspresskolben (430) ein Innengewinde (439) aufweist, in welches die Gewindestange (440) eingeschraubt ist.

6. Schraube nach Anspruch 5,
**dadurch gekennzeichnet,**
**dass** die Gewindestange (440) und der Schaft (410) separate Teile sind, wobei die Gewindestange (440) und der Schaft (410) über eine drehfeste Einsteckverbindung (442, 420) gekoppelt sind.

7. Schraube nach einem der vorstehenden Ansprüche,
**dadurch gekennzeichnet,**
**dass** der Auspresskolben (130, 230, 330, 430) zumindest bereichsweise radial über den Schaft (110, 410) vorsteht.

8. Schraube nach einem der vorstehenden Ansprüche,
**dadurch gekennzeichnet,**
**dass** der Auspresskolben (130, 230, 330, 430) zumindest einen radial vorspringenden Gewindeabschnitt (131, 231, 431) aufweist.

9. Schraube nach einem der vorstehenden Ansprüche,
**dadurch gekennzeichnet,**
**dass** der Auspresskolben (230, 330, 430) einen Dichtkragen (235, 335, 435) aufweist, und dass der Schaft (110, 410) an seinem vorderen Ende bereichsweise im Dichtkragen (235, 335, 435) aufgenommen ist.

10. Verfahren zum Setzen einer Schraube nach einem der vorstehenden Ansprüche, bei dem die Schraube in eine Bohrung in einem Substrat eingedreht wird, wobei die zumindest eine Gewindewendel (111, 411) ein Gegengewinde in das Substrat schneidet, und wobei der Auspresskolben (130, 230, 330, 430) Masse aus dem Massereservoir (160, 460) auspresst.
